(19) Europäisches Patentamt
European Patent Office
Office européen des brevets

(11) **EP 2 062 413 B1**

(12) **EUROPÄISCHE PATENTSCHRIFT**

(45) Veröffentlichungstag und Bekanntmachung des Hinweises auf die Patenterteilung:
**19.09.2012   Patentblatt 2012/38**

(21) Anmeldenummer: **07802012.0**

(22) Anmeldetag: **30.08.2007**

(51) Int Cl.:
*H04L 27/26* *(2006.01)*

(86) Internationale Anmeldenummer:
**PCT/EP2007/007593**

(87) Internationale Veröffentlichungsnummer:
**WO 2008/031504 (20.03.2008 Gazette 2008/12)**

(54) **KONZEPT ZUR REALISTISCHEN SIMULATION EINES FREQUENZSPEKTRUMS**

DESIGN FOR THE REALISTIC SIMULATION OF A FREQUENCY SPECTRUM

CONCEPT DE SIMULATION RÉALISTE D'UN SPECTRE DE FRÉQUENCES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.09.2006   DE 102006043411**

(43) Veröffentlichungstag der Anmeldung:
**27.05.2009   Patentblatt 2009/22**

(73) Patentinhaber: **Innovationszentrum für Telekommunikationstechnik GmbH IZT**
**91058 Erlangen (DE)**

(72) Erfinder:
• **GRÜNER, Uwe**
**91177 Thalmässing (DE)**

• **KLOSE, Andreas**
**90425 Nürnberg (DE)**
• **PERTHOLD, Rainer**
**91085 Weisendorf (DE)**
• **ZIMMERMANN, Roland**
**93152 Nittendorf (DE)**

(74) Vertreter: **Zimmermann, Tankred Klaus et al**
**Schoppe, Zimmermann, Stöckeler & Zinkler**
**Patentanwälte**
**Postfach 246**
**82043 Pullach bei München (DE)**

(56) Entgegenhaltungen:
**EP-A- 0 195 573     DE-A1- 19 901 228**

**Beschreibung**

Die vorliegende Erfindung bezieht sich auf eine Vorrichtung und ein Verfahren zur Simulation eines aus einer Mehrzahl von Einzelsignalen zusammengesetzten Signals, wie es insbesondere zur realistischen Simulation eines Frequenzspektrums eingesetzt werden kann.

Unter Verfahren zur Ortsbestimmung von Sendern bzw. Emittern von Radiowellen, wie beispielsweise der Funkpeilung, versteht man Verfahren, wobei beispielsweise mittels Richtungsbestimmung oder Zeitmessung eines Funksignals eine eigene Position eines Funkpeilers oder eine Position und/oder Richtung eines Senders bzw. Emitters bestimmt werden kann. Oft kann dabei auch eine Relativgeschwindigkeit zwischen Sender und Empfänger bestimmt werden. Funkpeiler verhalten sich im Allgemeinen rein passiv und wählen nur elektomagnetische Wellen aus, die an anderer Stelle von anderen Geräten abgestrahlt werden. Zur Funkpeilung sind im Allgemeinen ein Peilempfänger und eine oder mehrere Antennen erforderlich.

Um Empfänger bzw. Funkpeiler, die beispielsweise in der Funkerfassung bzw. Funkpeilung verwendet werden, in einem realistischen Szenario zu testen, ist es erforderlich, innerhalb eines möglichst breiten Frequenzbereichs eine Vielzahl von modulierten, zeitvarianten Signalen bzw. Emittersignalen mit realistischem Signalinhalt zu erzeugen. Weiterhin ist zum Test von Funkpeilern erforderlich, diese Vielzahl von Signalen an mehreren Ausgängen eines Testgerätes mit genau definierten Phasen-, Frequenz- und Pegelunterschieden zur Verfügung zu stellen.

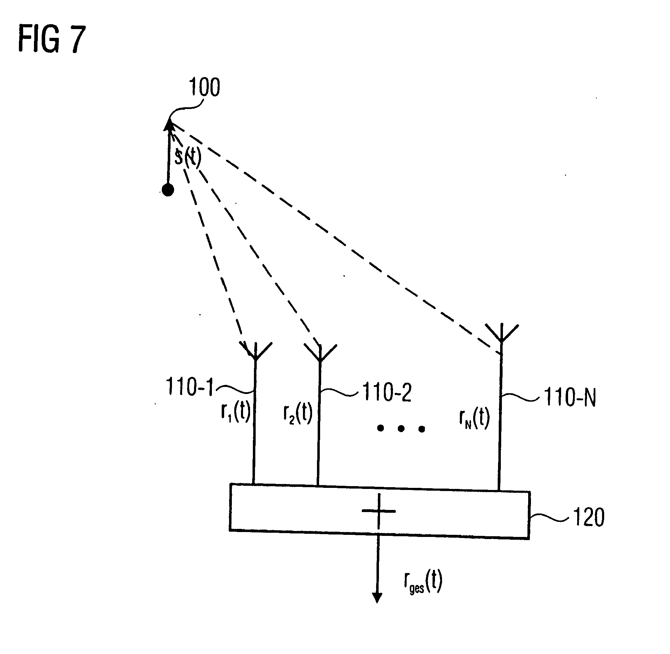

Fig. 7 zeigt das Prinzip einer sogenannten Interferometerpeilung, wobei Phasenbeziehungen zwischen mehreren räumlich getrennten gleichartigen Einzelantennen zur Richtungsbestimmung genutzt werden.

Fig. 7 zeigt einen Sender bzw. Emitter 100, eine Mehrzahl von Empfangsantennen 110-1, 110-2,...,110-N und eine Kombinationseinrichtung 120. Der Emitter 100 sendet ein moduliertes, zeitvariantes Emittersignal s(t) an einem SignalOrt aus, welches jeweils von den Empfangsantennen 110-1 bis 110-N empfangen wird. Da die Empfangsantennen 110-1 bis 110-N räumlich voneinander getrennt sind, weisen die jeweiligen Empfangssignale $r_1(t)$ bis $r_N(t)$ jeweils unterschiedliche Phasenbeziehungen zueinander auf. Zur Weiterverarbeitung bzw. Bestimmung des Signalorts können die unterschiedlichen Empfangssignale $r_1(t)$ bis $r_N(t)$ mittels der Kombinationseinrichtung 120 zu einem Gesamtsignal bzw. kombinierten Signal $r_{ges}(t)$ kombiniert werden.

Das in Fig. 7 gezeigte Szenario könnte auch umgekehrt sein. Dabei könnten die Antennen 110-1, 110-2,...,110-N beispielsweise als Sendeantennen an verschiedenen Signalorten wirken und Sende- bzw. Emittersignale $s_1(t)$ bis $s_N(t)$ zu einem Empfänger 100 senden, der daraufhin ein aus der Mehrzahl der Einzelsignale $s_1(t)$ bis $s_N(t)$ zusammengesetztes Signal $s_{ges}(t)$ empfängt.

Bei praktischen Tests von Empfängern bzw. Funkpeilern, die in einem Labor stattfinden sollen, ist es vorteilhaft, realistische Szenarien bzgl. Signal- und Empfängerpositionen, wie sie in Fig. 7 schematisch für einen Emitter und mehrere Empfangsantennen gezeigt sind, zu simulieren. Natürlich ist auch eine Mehrzahl von Emittern denkbar. Dabei lässt sich prinzipiell die erforderliche Anzahl an Emittersignalen mittels Standard-Messtechnik erzeugen, die aus einer Kombination eines sogenannten Arbitrary Waveform Generators (AWG = Arbitrary Waveform Generator) mit einem Frequenzumsetzer besteht. Der Nachteil dieses Verfahrens besteht jedoch darin, dass entsprechende Speicheranforderungen in einem AWG vergleichsweise hoch sind, da die Emittersignale in einer zu sendenden Signalbandbreite abgelegt werden müssen. Um beispielsweise nur 10 Sekunden lang ein 20 MHz breites Spektrum simulieren zu können, sind bereits ca. 1,5 Gigabyte an Daten erforderlich. Weiterhin ist der Zeitaufwand für die Errechnung der Daten hoch und liegt normalerweise um Größenordnungen über der eigentlichen Zeitdauer des Emittersignals. Eine Änderung der Sender- bzw. Emitter-Konfiguration in Echtzeit durch einen Benutzereingriff ist bei einer solchen Konfiguration nicht möglich, was ebenfalls einen erheblichen Nachteil darstellt. Um diesen Nachteil zu umgehen, wäre es erforderlich, pro Emitter einen AWG mit variabler Taktfrequenz und Frequenzumsetzer mit variabler Mittenfrequenz zu verwenden. Dies ist in der Regel jedoch unwirtschaftlich.

Aus der EP-A-0195573 ist ein Signalgenerator bekannt, der ein Signal mit einer großen spektralen Bandbreite erzeugt, in einem Bereich von 40 bis 90 KHz zur Verwendung in einem häuslichen Signalisierungssystem. In dem Generator laufen sechszehn einzelne Frequenzen mit gleichem Frequenzabstand voneinander zu Abtasteinrichtungen, die bei einer Taktfrequenz von 204,8 KHz betrieben werden, und dann zu Quantisierern, bevor sie gespeichert werden. Die resultierenden Signale werden dann durch einen Auswahlschalter auf geeignete Weise zusammengesetzt, bevor sie gefiltert werden, während sie temporär im Zeitbereich sind.

Die Aufgabe der vorliegenden Erfindung besteht somit darin, ein verbessertes Konzept zur realistischen Simulation eines Frequenzspektrums eines aus einer Mehrzahl von Einzelsignalen zusammengesetzten Signals bereitzustellen.

Diese Aufgabe wird durch eine Vorrichtung zur Simulation eines aus einer Mehrzahl von Einzelsignalen zusammengesetz-ten Signals gemäß Patentanspruch 1 oder ein Verfahren zur Simulation eines aus einer Mehrzahl von Einzelsignalen zusammengesetzten Signals gemäß Patentanspruch 19 gelöst.

Der vorliegenden Erfindung liegt die Erkenntnis zugrunde, dass Phasen-, Frequenz- und Pegelunterschiede der Einzelsignale der Mehrzahl von Signalen nicht durchgehend im Zeitbereich simuliert werden, sondern die Simulation des aus der Mehrzahl von Einzelsignalen von jeweiligen Signalorten zusammengesetzten Signals an einen Simulationsort realisiert wird, derart, dass die unterschiedlichen Merkmale der emittierten Einzelsignale teilweise im Zeit- und teilweise im Frequenzbereich simuliert werden.

Dazu werden die Emittersignale im Zeitbereich als Zeitfunktion im komplexen Basisband bereitgestellt. Bei Ausführungsbeispielen der vorliegenden Erfindung sind die Emittersignale dafür in einem geeigneten Speicher als Zeitfunktion im komplexen Basisband mit unterschiedlichen, aber fest definierten Abtastraten abgelegt. In einem nächsten Schritt werden die Emittersignale vom Zeitbereich in den Frequenzbereich transformiert. Gemäß Ausführungsbeispielen der vorliegenden Erfindung werden die einzelnen zeitvarianten Emittersignale dazu blockweise bzw. segmentweise mittels einer kurzen Fast-Fourier-Transformation (FFT) in einen Basisbandfrequenzbereich transformiert. Danach werden die in den Frequenzbereich transformierten Emittersignale jeweils abhängig von einem zwischen dem Simulationsort und dem jeweiligen Signalort vorliegenden Signalkanal verarbeitet bzw. manipuliert. Im Frequenzbereich können durch den Verschiebungssatz der Diskreten-Fourier-Transformation (DFT) zeitliche Verzögerungen der Einzelsignale fein, d.h. im Subsamplebereich, eingestellt werden, sowie mit einer Dämpfung eines simulierten Ausbreitungs- bzw. Signalkanals beaufschlagt werden. Im Anschluss daran werden die in den Frequenzbereich transformierten Emittersignale im Frequenzbereich zu einem kombinierten Signal kombiniert. Dazu wird gemäß Ausführungsbeispielen der Basisbandfrequenzbereich der Einzelsignale zu einem Ausgangsfrequenzbereich erweitert, d.h. gemäß Ausführungsbeispielen eine Anzahl von Bins der kurzen FFT vergrößert, um die in den Frequenzbereich transformierten Basisbandsignale jeweils in einen Zwischen- bzw. Trägerfrequenzbereich verschieben zu können. Sind die einzelnen Emittersignale jeweils in ihren Zwischen- bzw. Trägerfrequenzbereich verschoben, so werden diese von einer Kombinationseinrichtung zu dem kombinierten Signal bzw. Gesamtsignal kombiniert. Darauffolgend wird das kombinierte Signal im Frequenzbereich in den Zeitbereich transformiert, um ein simuliertes zusammengesetztes Signal am Simulationsort zu erhalten. Gemäß Ausführungsbeispielen wird das Gesamtsignal dazu mittels einer Inversen Fast Fourier Transformation (IFFT = Inverse Fast Fourier Transformation) zurück in den Zeitbereich transformiert. Dabei ist hervorzuheben, dass die Länge der IFFT aufgrund des erweiterten Ausgangsfrequenzbereichs größer ist als die Länge der eingangsseitigen kurzen FFT zur Frequenztransformation der einzelnen Emittersignale.

Das Ausgangssignal im Zeitbereich kann nun bei weiteren Ausführungsbeispielen der vorliegenden Erfindung mittels eines Digital-zu-Analog Wandlers (DAC = Digital-Analogue Converter) zu einem analogen Zeitsignal gewandelt werden, um es anschließend einem zu testenden Empfänger bzw. Funkpeiler zuzuführen.

Für eine möglichst realistische Nachbildung einer Belegung eines Frequenzspektrums ist es im wesentlichen erforderlich, möglichst viele relativ schmalbandige Sender bzw. Emitter simulieren zu können. Das erfindungsgemäße Konzept weist den Vorteil auf, dass bei einer hohen Anzahl von Emittern, insbesondere schmalbandigen Emittern, lediglich ein geringer Ressourcenbedarf zur Simulation des aus einer Mehrzahl von Einzelsignalen zusammengesetzten Signals notwendig ist. Das liegt insbesondere daran, dass zur Transformation der Einzelsignale in den Frequenzbereich eine FFT mit einer vergleichsweise kurzen Länge verwendet wird, wohingegen zur Berechnung des kombinierten Ausgangssignals eine IFFT mit größerer Länge verwendet wird. Durch die kurze eingangsseitige FFT-Länge kann demnach aufwandgünstig eine hohe Anzahl von Emittern simuliert werden.

Ein weiterer Vorteil von Ausführungsbeispielen der vorliegenden Erfindung besteht darin, dass wesentliche Verarbeitungsschritte zur Simulation der Einzelsignale gut parallelisiert werden können und damit auch auf getrennten Hardwareplattformen gerechnet werden können. Zusätzlich kann in niedrig getakteten Bereichen, d.h. in Bereichen zur Simulation der Einzelsignale im Basisband, durch Zeitmultiplex eine erhebliche Aufwandsreduzierung bezüglich der eingesetzten Ressourcen erreicht werden. Vorteilhaft ist weiterhin die einfache Strukturierung der Implementierung von Ausführungsbeispielen der vorliegenden Erfindung, welche somit gut skalierbar ist.

Ein weiterer Vorteil von Ausführungsbeispielen der vorliegenden Erfindung ist, dass die Anzahl von schnell zu taktenden Verarbeitungsstufen, die in einer Größenordnung eines Systemtakts betrieben werden, nur unterproportional mit der Anzahl der simulierten Sender bzw. Emitter ansteigt.

Bevorzugte Ausführungsbeispiele der vorliegenden Erfindung werden nachfolgend bezugnehmend auf die beiliegenden Zeichnungen detailliert erläutert. Es zeigen:

Fig. 1      eine Vorrichtung zum Simulieren eines aus einer Mehrzahl von Signalen zusammengesetzten Signals gemäß einem Ausführungsbeispiel der vorliegenden Erfindung;

Fig. 2      ein Blockdiagramm einer Vorrichtung zur Simulation eines aus einer Mehrzahl von Signalen zusammengesetzten Signals gemäß einem weiteren Ausführungsbeispiel der vorliegenden Erfindung;

Fig. 3a-c      schematische Darstellungen zur Erläuterung der Funktionsweise eines Interpolationsfilters gemäß einem Ausführungsbeispiel der vorliegenden Erfindung;

Fig. 4      eine schematische Darstellung zur Erläuterung der Funktionsweise einer Nullenergänzungsvorschrift gemäß einem Ausführungsbeispiel der vorliegenden Erfindung;

Fig. 5 eine schematische Darstellung zur Erläuterung der Erweiterung des Basisbandfrequenzbereichs der transformierten Einzelsignale zu einem Ausgangsfrequenzbereichs gemäß einem Ausführungsbeispiel der vorliegenden Erfindung;

Fig. 6 ein Blockdiagramm einer Vorrichtung zur Simulation eines aus einer Mehrzahl von Einzelsignalen zusammengesetzten Signals gemäß einem weiteren Ausführungsbeispiel der vorliegenden Erfindung; und

Fig. 7 eine schematische Darstellung eines Szenarios einer Peilung eines Senders mit einem Funkpeiler.

Bezüglich der nachfolgenden Beschreibung sollte beachtet werden, dass bei den unterschiedlichen Ausführungsbeispielen gleich oder gleichwirkende Funktionselemente gleiche Bezugszeichen aufweisen und somit die Beschreibung dieser Funktionselemente in den verschiedenen in den nachfolgend dargestellten Ausführungsbeispielen untereinander austauschbar sind.

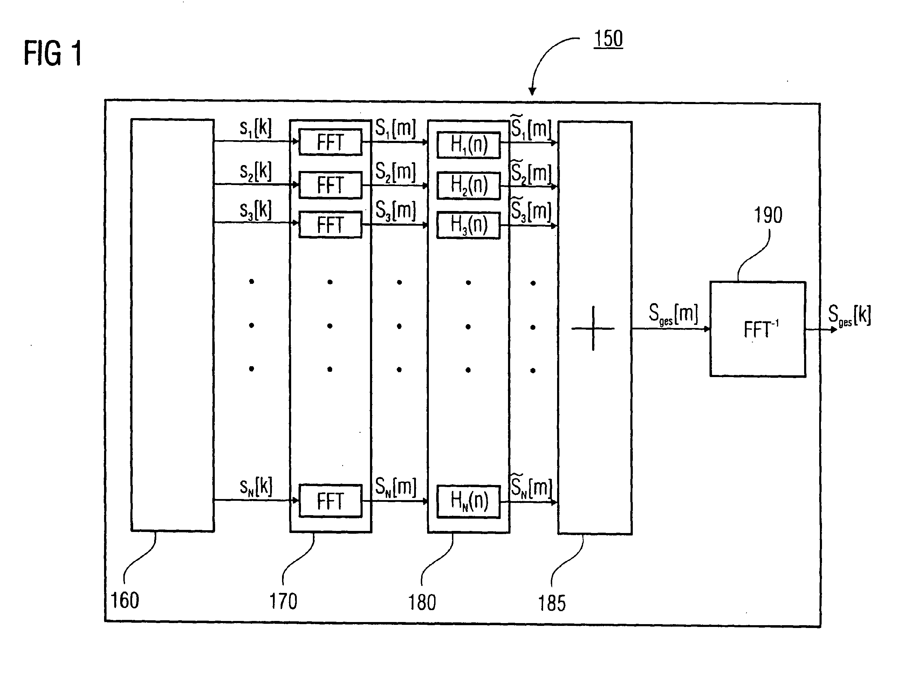

Fig. 1 zeigt ein Blockschaltbild einer Vorrichtung zur Simulation eines aus einer Mehrzahl von Einzelsignalen von jeweiligen Signalorten zusammengesetzten Signals an einem Simulationsort gemäß einem Ausführungsbeispiel der vorliegenden Erfindung.

Die Vorrichtung 150 umfasst eine Einrichtung zum Bereitstellen der Mehrzahl von zeitdiskreten Basisbandeinzelsignalen $s_1[k]$ bis $s_N[k]$ im Zeitbereich, eine Einrichtung 170 zum Transformieren der zeitdiskreten Einzelsignale $s_1[k]$ bis $s_N[k]$ in einen frequenzdiskreten Basisbandfrequenzbereich, einer Einrichtung 180 zur Verarbeitung der in den Basisbandfrequenzbereich transformierten Einzelsignale $S_1[m]$ bis $S_N[m]$, einer Einrichtung 185 zum Kombinieren der verarbeiteten, in den Frequenzbereich transformierten Einzelsignale $\tilde{S}_1[m]$ bis $\tilde{S}_N[m]$ in ein kombiniertes Signal $S_{ges}[m]$ im Frequenzbereich und einer Einrichtung 190 zum transformieren des kombinierten Signals $S_{ges}[m]$ im Frequenzbereich in den Zeitbereich zum Erzeugen des simulierten zusammengesetzten zeitdiskreten Signals $s_{ges}[k]$ im Zeitbereich am Simulationsort.

Gemäß Ausführungsbeispielen der vorliegenden Erfindung kann die Einrichtung 160 zum Bereitstellen beispielsweise einen Speicher aufweisen, in dem wenigstens einzelne der Emittersignale $s_1[k]$ bis $s_N[k]$ als Zeitfunktion im komplexen Basisband mit unterschiedlichen, aber fest definierten Abtastraten $1/T_1$ bis $1/T_N$ abgelegt sind, wobei $T_n$ (n=1,2,...,N) jeweils eine Dauer einer Abtastperiode eines Emittersignals $s_n[k]$ (n=1,...,N) bedeutet. Bei dem Speicher kann es sich beispielsweise um einen RAM (RAM = Random Access Memory) oder einen Festplattenspeicher handeln, der nicht zwingend in der Einrichtung 160 zum Bereitstellen bzw. in der Vorrichtung 150 zur Simulation integriert sein muss. Denkbar ist beispielsweise ein externer Speicher. Die einzelnen Emittersignale $s_1[k]$ bis $s_N[k]$ könnten gemäß weiteren Ausführungsbeispielen der vorliegenden Erfindung beispielsweise auch in Echtzeitzeit generiert und bereitgestellt werden.

Gemäß weiteren Ausführungsbeispielen der vorliegenden Erfindung weist die Einrichtung 160 zum Bereitstellen Interpolationsfilter mit unterschiedlichen Interpolationsfaktoren $X_n$ (n=1,2,...,N) auf, um die schmalbandigen Emittersignale $s_1[k]$ bis $s_N[k]$ jeweils auf eine höhere Abtastrate $1/T_n'$ (n=1,2,..,N) zu bringen, wobei $T_n'=T_n/X_n$. Die Abtastratenerhöhung dient zum einen dazu, später eine minimal praktisch sinnvolle FFT-Länge $L_{FFT,n}$ (n=1,2,...,N) für jedes der N Basisbandeinzelsignale nicht zu unterschreiten und zum anderen dazu, dass eine Impulsantwort einer später folgenden Interpolationsstufe im Frequenzbereich hinreichend kurz gewählt werden kann.

Bei weiteren Ausführungsbeispielen der vorliegenden Erfindung kann die Einrichtung 160 zum Bereitstellen ferner einen digitalen Mischer und einen numerisch gesteuerten Oszillator (NCO = Numerically Controlled Oscillator) aufweisen. Der digitale Mischer dient dabei zur Kombination der einzelnen interpolierten Basisbandsignale mit einem von dem NCO erzeugten harmonischen Signal $S_{NCO}[k]$. Typischerweise umfasst ein NCO einen digitalen Wellenformgenerator (DDS = Direct Digital Synthesiser), der einen Phasenzähler auf einer Abtastintervallbasis erhöht.

Der digitale Mischer und der NCO ermöglichen somit eine einstellbare Frequenzverschiebung der Emittersignale, insbesondere der interpolierten Emittersignale, mit einer feineren Auflösung als durch eine Anwendung des Verschiebungssatzes der DFT bei der Verbindung zwischen FFT und IFFT möglich ist. Dabei lässt sich die DFT S[m] einer endlichen zeitdiskreten Folge s [k] der Länge K im Algemeinen schreiben als

$$S[m] = \sum_{k=0}^{K-1} s[k] W_K^{mk} \; .$$

Die inverse DFT berechnet man dementsprechend gemäß

$$s[k] = \frac{1}{K} \sum_{m=0}^{K-1} S[m] W_K^{-mk} \; ,$$

wobei $W_K = e^{-j2\pi/K}$. Der Verschiebungssatz der DFT besagt dabei im Allgemeinen, dass eine Verschiebung im Zeitbereich eine Multiplikation des Spektrums einer nicht zeitverschobenen Folge mit einem linearphasigen Term bewirkt, d.h. $s[k-i] \xrightarrow{DFT} W_K^{m \cdot i} S[m]$. Allerdings muss die Verschiebung eine ganze Zahl von Abtastwerten betragen, also $i \in Z$. Ebenso entspricht einer Verschiebung des Spektrums um die Kreisfrequenz im Zeitbereich einer Modulation mit dieser Frequenz, d.h.

$$W_K^{-k \cdot l} s[k] \xrightarrow{DFT} S[m-l].$$

Um die komplexen Basisbandsignale $s_i[k]$ bis $s_N[k]$ jeweils mit einem Tiefpassfilter mit einer endlichen Impulsantwort $h_1[k]$ zu filtern, kann erfindungsgemäß eine blockweise schnelle Faltung verwendet werden, bei welcher das zu filternde Signal $s_n[k]$ (n = 1,...,N) jeweils in Segmente der Länge L aufgeteilt wird. Jedes Segment kann mit der endlichen Impulsantwort $h_1[k]$ der Länge P gefaltet werden und die gefilterten Segmente können dann wieder in einer passenden Art und Weise zusammengesetzt werden. Besitzt ein Segment des zu filternden Signals $s_n[k]$ (n = 1,...,N) also die Länge L und die Impulsantwort $h_1[k]$ die Länge P, so besitzt die lineare Faltung dieser beiden Folgen die endliche Länge (L+P-1). Da die DFT der Faltung der beiden Folgen, welche (L+P-1) Abtastwerte lang ist, die DFT der linearen Faltung von $s_n[k]$ und $h_1[k]$ beschreiben soll, muss auch jeweils die DFT von einem Segment des zu filternden Signals $s_n[k]$ (n = 1,...,N) und $h_1[k]$ für diese Länge (L+P-1) berechnet werden. D.h. sowohl die Segmente von $s_n[k]$ (n = 1,...,N) als auch $h_1[k]$ werden vorteilhaft mit einer Folge von Nullen verlängert. Dieser Prozess wird im allgemeinen als Nullenergänzung (Zero Padding) bezeichnet. Um dies zu bewerkstelligen, umfasst gemäß Ausführungsbeispielen der vorliegenden Erfindung die Einrichtung 160 zum Bereitstellen einen sogenannten Zero-Padding-Block. Der Zero-Padding-Block dient außerdem dazu, eine gewünschte Zeitverzögerung i des entsprechenden (interpolierten) Emittersignals grob, d.h. mit einer zeitlichen Granularität des Abtastintervalls $T_n' = T_n/X_n$ einzustellen, indem für einen Block die Länge L um eins reduziert oder erhöht und die Anzahl der eingefügten Nullen entsprechend angepaßt wird.

Gemäß Ausführungsbeispielen der vorliegenden Erfindung weist die Einrichtung 170 zum Transformieren der einzelnen Emittersignale in den Frequenzbereich N FFT-Blöcke auf, um jedes einzelne der Mehrzahl von Signalen mittels einer kurzen FFT, deren Bandbreite in der Größenordnung der doppelten Bandbreite eines Emittersignals zuzüglich der Frequenzverschiebung $f_{NCO}$ durch den NCO liegt in den Frequenzbereich zu transformieren. Weist ein Segment des zu filternden Emittersignals also die Länge L auf, so wird es mittels des Zero-Padding-Blocks auf beispielsweise eine Länge $L_{FFT,n} = 2L > (L+P-1)$ erweitert, um eine Bandbreite der FFT in der Größenordnung der doppelten Bandbreite des Basisbandemittersignals zu erhalten. Jedes der in den Frequenzbereich transformierten Einzelsignale $S_n[m]$ (m=1,2,..., $L_{FFT,n}$; n = 1,...,N) wird nun mit der DFT $H_{1,n}[m]$ der Impulsantwort $h_{1,n}[k]$ (m=1,2,...$L_{FFT,n}$; n = 1,...,N) multipliziert, um die Faltung der Einzelsignale mit der Impulsantwort im Frequenzbereich zu bewerkstelligen.

Um die in den Frequenzbereich transformierten Einzelsignale $S_n[m]$ (m=1,2,..., $L_{FFT,n}$; n = 1,...,N) jeweils abhängig von einem zwischen dem Simulationsort und dem jeweiligen Signalort vorliegenden Signalkanal $H_{2,n}[m]$ (m=1,2,..., $L_{FFT,n}$; n = 1,...,N) verarbeiten zu können, weist die Einrichtung 180 zur Verarbeitung Blöcke auf, in denen jeweils die mit $H_1[m]$ multiplizierten in den Frequenzbereich transformierten Einzelsignale $S_n[m]$ (n = 1,...,N) mit einem Phasendrehterm und einem Amplitudenwert multipliziert werden können. Durch den Phasendrehterm von $H_{2,n}[m]$ kann eine gewünschte Zeitverzögerung und Phasenlage des Eingangssignals $s_n[k]$ (n = 1,...,N) fein, d.h. im Subsamplebereich, eingestellt werden. Mit dem Amplituden bzw. Skalarwert von $H_{2,n}[m]$ kann beispielsweise eine Dämpfung eines Ausbreitungskanals vom Signalort zum Simulationsort simuliert werden.

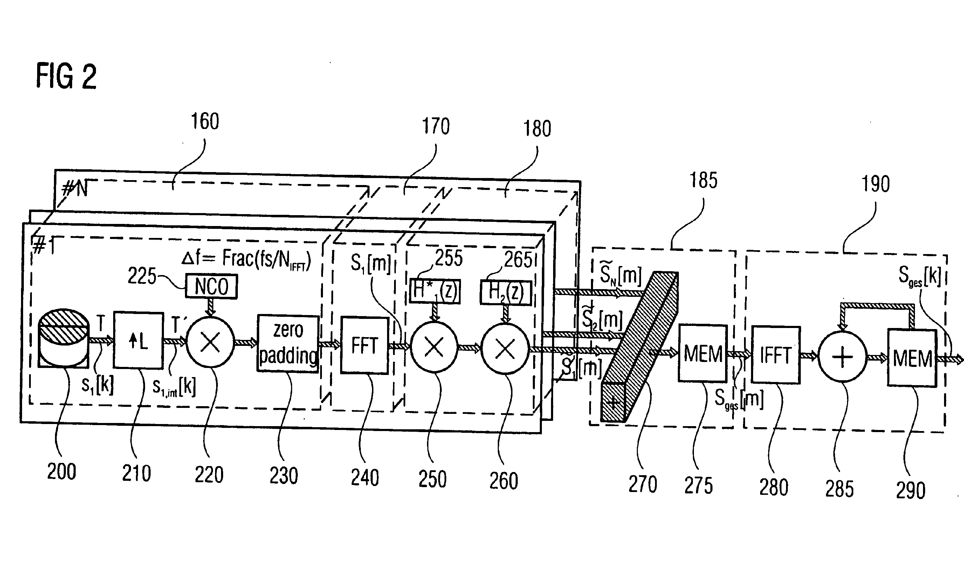

Weiterhin kann $H_{1,n}[m]$ und/oder $H_{2,n}[m]$ gemäß einem Ausführungsbeispiel der vorliegenden Erfindung zusätzlich so gewichtet werden, dass Fehler im Frequenzgang eines zurück in den Zeitbereich transformierten, danach digital-zu-analog gewandelten und analog weiterverarbeiteten Signals kompensiert werden können, wobei ein DAC (DAC = Digital-Ananlogue Converter) gemäß einem Ausführungsbeispiel der vorliegenden Erfindung ein aus den einzelnen Emittersignalen $S_n[m]$ (n = 1,...,N) kombiniertes in den Zeitbereich zurücktransformiertes Signal $s_{ges}[k]$ zu einem analogen Zeitsignal $s_{ges}(t)$ wandelt, wie es im Nachfolgenden noch beschrieben wird. Des Weiteren kann diese Frequenzgangkompensation gemäß einem weiteren Ausführungsbeispiel der vorliegenden Erfindung auch mit einem weiteren, in Fig. 2 nicht gezeigten separaten Filter $H_{3,n}[m]$ bewerkstelligt werden, was Vorteile bei einer Implementierung des erfindungsgemäßen Konzepts bieten kann. Dabei findet die Frequenzgangkompensation im Allgemeinen durch komplexwertige Gewichtsfunktionen $H_{1,n}[m]$, $H_{2,n}[m]$ bzw. $H_{3,n}[m]$ statt.

Mit den komplexen Gewichts- bzw. Übertragungsfunktionen $H_{1,n}[m]$, $H_{2,n}[m]$ bzw. $H_{3,n}[m]$ können also die in den Frequenzbereich transformierten Einzelsignale in Bezug auf ihre jeweilige Phase (konstante Phase), ihre jeweilige Verzögerung (linear zu- oder abnehmende Phase), ihre jeweilige Amplitude (konstanter Betrag) sowie in Bezug auf etwaige Kompensation von Fehlern in einem nachgelagerten Analogteil (eine irgendwie geartete komplexe Funktion) modifiziert werden.

Gemäß einem Ausführungsbeispiel der vorliegenden Erfindung umfasst die Einrichtung 185 zum Kombinieren eine Addierermatrix, die festlegt, wo in einem Ausgangsfrequenzbereich eine Zwischen- bzw. Träger-

frequenz der jeweiligen Emittersignale $s_n[k]$ (n = 1,...,N) zu liegen kommt. Dies wird gemäß einem Ausführungsbeispiel dadurch erreicht, indem die Anzahl der Bins der kurzen FFT erweitert wird, also indem der Frequenzbereich erweitert wird und die frequenzdiskreten Ausgangsdaten $S_n[m]$ (m=1,2,..., $L_{FFT,N}$; n = 1,...,N) der kurzen FFT auf geeignete Stellen bzw. Bins in dem erweiterten Ausgangsfrequenzbereich positioniert werden. Dies entspricht praktisch einer Verschiebung der einzelnen Basisbandsignale um eine jeweilige Zwischen- bzw. Trägerfrequenz in einen Zwischen- bzw. Trägerfrequenzbereich. Falls mehrere Emittersignale frequenzmäßig nahe beieinander oder gar überlappend platziert werden sollen, können die Ausgangsdaten $S_n[m]$ (m=1,2,..., $L_{FFT,n}$; n = 1,...,N) der FFTs auf den gleichen Bin im Ausgangsfrequenzbereich treffen. In diesem Fall werden diese Daten entsprechend addiert. Die Daten der einzelnen Frequenz-Bins des Ausgangsfrequenzbereichs bilden einen Eingangsvektor für eine Inverse Fast Fourier Transformation (IFFT), welche gemäß einem Ausführungsbeispiel der vorliegenden Erfindung mittels der Einrichtung 190 zum Transformieren des kombinierten Signals $S_{ges}[m]$ vom Frequenzbereich in den Zeitbereich bewerkstelligt wird.

Da zwischen jeweils zwei FFT-Eingangssegmenten L Abtastwerte liegen, aber jedes gefilterte Segment die Länge $L_{FFT,n} \geq (L+P-1)$ besitzt, werden sich wenigstens (P-1) nicht verschwindende Werte überlappen. Diese überlappenden Werte müssen bei der Ausführung der Summation bzw. Kombination von zwei aufeinanderfolgenden Ausgangssegmenten der IFFT in der Einrichtung 190 zusammengefasst werden. Diese Methode zur Bestimmung des gefilterten Ausgangssignals wird häufig als überlappende Additions-Methode (Overlap-Add-Method) bezeichnet, weil sich die gefilterten Segmente überlappen und zur Bestimmung des Ausgangssignals addiert werden. Das am Ausgang der Einrichtung 190 erhaltene zusammengesetzte zeitdiskrete Signal $s_{ges}[k]$ im Zeitbereich kann nun für einen Test beispielsweise eines Funkpeilers weiterverarbeitet werden.

Weitere Ausführungsbeispiele der erfindungsgemäßen Vorrichtung 150 zur Simulation eines aus einer Mehrzahl von Einzelsignalen zusammengesetzte Signals werden im nachfolgenden anhand der Figuren 2 bis 5 näher erläutert.

Fig. 2 zeigt ein Ausführungsbeispiel einer erfindungsgemä-βen Vorrichtung 150 zur Simulation eines aus einer Mehrzahl von Signalen $s_n[k]$ (n = 1,...,N) zusammengesetzten Signals $s_{ges}[k]$, die eine Einrichtung 160 zum Bereitstellen der Mehrzahl von Einzelsignalen $s_n[k]$ (n = 1,...,N) im Zeitbereich, eine Einrichtung 170 zum Transformieren der Einzelsignale in den Frequenzbereich, eine Einrichtung 180 zur Verarbeitung der in den Frequenzbereich transformierten Einzelsignale $S_n[m]$ (m=1,2,..., $L_{FFT,n}$; n = 1,...,N), eine Einrichtung 185 zum Kombinieren der verarbeiteten in den Frequenzbereich transformierten Einzelsignale und eine Einrichtung 190 zum Transformieren des kombinierten Signals $S_{ges}[m]$

(m=1,2,..., $L_{IFFT}$) im Frequenzbereich in den Zeitbereich umfasst.

Die Einrichtung 160 zum Bereitstellen der N Einzelsignale in den Frequenzbereich umfasst einen Speicher 200, in dem die Einzelsignale $s_n[k]$ (n = 1,...,N) als Zeitfunktionen im komplexen Basisband mit unterschiedlichen, aber fest definierten Abtastraten $1/T_n$ abgelegt sind. Bei dem Speicher 200 kann es sich beispielsweise um RAM oder Festplattenspeicher handeln. Eine von dem Speicher 200 ausgegebene Abtastfolge eines Einzelsignals $s_n[k]$ (n = 1,...,N) wird mit einem von der Einrichtung 160 umfassten Interpolationsfilter 210 jeweils auf eine höhere Abtastrate gebracht. Ein Erhöhungsfaktor $X_n$ (n = 1,...,N) der Abtastrate kann dabei gemäß Ausführungsbeispielen der vorliegenden Erfindung beispielsweise $X_n$=1, $X_n$=2 oder $X_n$=4 betragen. Im Allgemeinen kann $X_n$ jedoch beliebige, bevorzugt ganzzahlige Werte annehmen. Die Erhöhung der Abtastrate dient zum einen dazu, dass eine praktisch minimale sinnvolle FFT-Länge $L_{FFT,n}$ für spätere Verarbeitungsschritte nicht unterschritten wird und zum anderen, dass eine Impulsantwort $h_{1,n}[k]$ einer nachfolgenden Interpolationsstufe im Frequenzbereich hinreichend kurz gewählt werden kann. Die diskrete Fourier-Transformierte des Ausgangssignals des Interpolators $s_{n,int}[k]$ (n = 1,...,N) ist eine frequenzskalierte Version der Fourier-Transformierten des Eingangssignals $s_n[k]$ (n = 1,...,N).

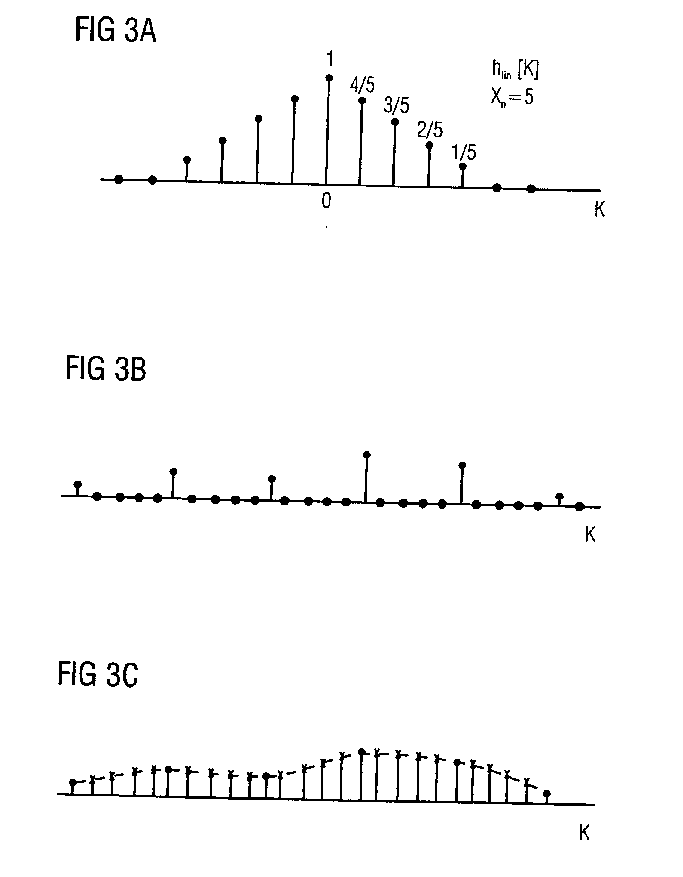

Bei dem Interpolationsfilter 210 kann es sich beispielsweise um einen linearen Interpolator handeln, dessen Impulsantwort beispielhaft in Fig. 3a für $X_n$ = 5, d.h. eine Abtastratenerhöhung um den Faktor $X_n$ = 5 gezeigt ist. Ein derartiges lineares Interpolationsfilter besitzt im allgemeinen eine Impulsantwort der Form

$$h_{lin} = \begin{cases} 1 - \frac{|n|}{X}; |k| \leq X \\ 0, sonst \end{cases} \quad .$$

Zur Erhöhung der Abtastrate um einen Faktor X werden im allgemeinen zwischen zwei aufeinander folgenden Samples der Eingangsfolge X-1 Nullen eingefügt, wie es in Fig. 3b schematisch dargestellt ist. Durch Filterung eines in seiner Abtastrate erhöhten Signals mit dem linearen Filter ergibt sich ein Signal, wie es schematisch in Fig. 3c gezeigt ist. Ein typischer Bereich der Abtastrate nach dem Interpolationsfilter 210 für ein Emittersignal $s_{n,int}[k]$ (n = 1,...,N) beträgt 312.5 kS/s (kS/s = Kilosamples pro Sekunde) bis 10 MS/s (MS/s = Megasamples pro Sekunde). Je nach Anwendung des erfindungsgemäßen Konzepts sind natürlich auch kleinere bzw. größere Abtastraten denkbar.

Das in seiner Abtastrate erhöhte Signal $s_{n,int}[k]$ (n = 1,...,N) am Ausgang des Interpolationsfilters 210 wird mittels eines digitalen Mischers 220 mit einem von einem NCO 225 erzeugten harmonischen Signal $s_{NCO,n}[k]$ gemischt. Das von dem NCO 225 erzeugte harmonische Signal dient zu einer einstellbaren Frequenzverschiebung des Emittersignals mit einer feineren Auflösung als durch die Anwendung des Verschiebungssatzes der DFT bei der Verbindung zwischen FFT und IFFT möglich ist. Dabei wird also das Emittersignal $s_{n,int}[k]$ (n = 1,...,N) um einen kleinen Frequenzbetrag $f_{NCO,n}$ verschoben, um beispielsweise eine Dopplerverschiebung oder eine Lokaloszillator-Verstimmung in einem Empfangszweig eines Funkpeilers zu simulieren.

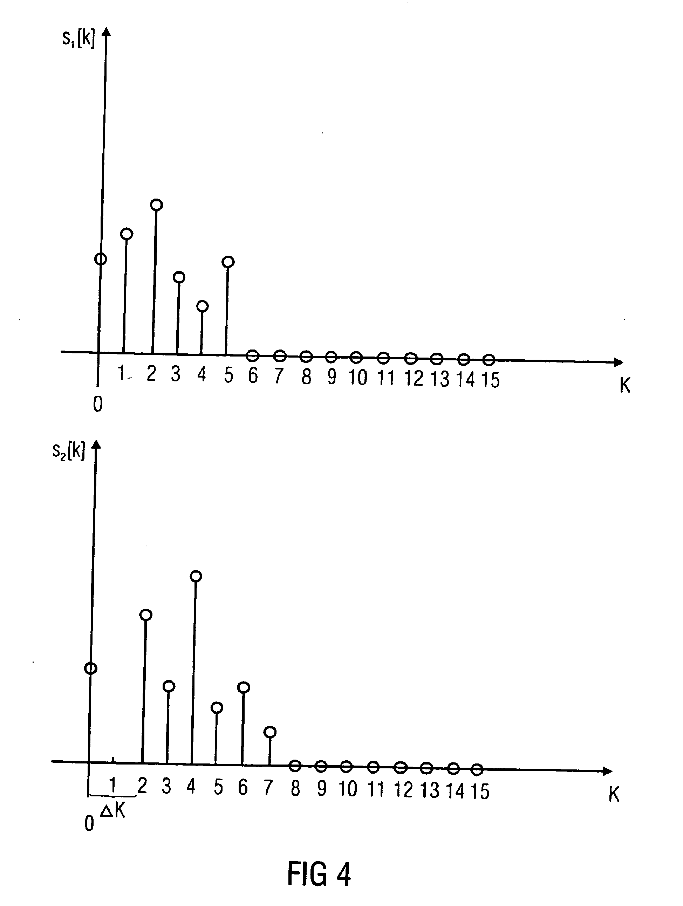

Am Ausgang des digitalen Mischers 220 wird das interpolierte und frequenzverschobene Emittersignal mittels eines Zero-Padding-Blocks 230 jeweils in Segmente bzw. Blöcke der Länge L=±1 unterteilt. Durch die im vorhergehenden bereits beschriebene Nullenergänzung werden die einzelnen Blöcke auf eine Länge von $L_{FFT} \geq (L+P-1)$ gebracht, um eine blockweise Faltung des interpolierten und frequenzverschobenen Emittersignals mit einer Impulsantwort $h_1[k]$ der Länge P zu bewerkstelligen, wobei diese Faltung zur Komplexitätsreduktion im Frequenzbereich stattfindet. Der Nullstellenergänzungsblock bzw. Zero-Padding-Block 230 dient nicht nur zur Nullstellenergänzung, sondern er dient ebenso dazu, eine gewünschte Zeitverzögerung des entsprechenden Emittersignals $s_{n,int}[k]$ (n = 1,...,N) grob einzustellen. Dabei kann eine Zeitverzögerung in einem Raster mit einer Granularität der Abtastperiodendauer $T_n'$ erfolgen. Dieser Zusammenhang ist in Fig. 4 veranschaulicht.

Fig. 4 zeigt beispielhaft ein Segment eines Signals $s_{1,int}[k]$ der Länge L=6, welches durch Nullen ergänzt wird, um eine Länge $L_{FFT,1}$=16 zu erhalten. Weiterhin zeigt Fig. 4 ein Segment eines Signals $s_{2,int}[k]$ der Länge L=6, welches um zwei Abtastperioden $T_2'$ verzögert wird und zusätzlich durch Nullen auf eine Gesamtlänge von $L_{FFT,2}$=16 ergänzt wird.

Gemäß weiteren Ausführungsbeispielen der vorliegenden Erfindung werden die Signale $s_{n,int}[k]$ nicht gegeneinander verschoben, um eine grobe zeitliche Verzögerung zu bewirken. Vielmehr werden bei Bedarf beispielsweise L+1 bzw. L-1 Samples für ein Segment herangezogen, um einen Zeitversatz gegenüber anderen der Emittersignale zu erreichen. Auf diese Weise kann vorteilhaft ein Erreichen des Endes des in Fig. 4 gezeigten Fensters der Länge $L_{FFT,n}$ aufgrund einer zeitlichen Verschiebung vermieden werden. Voraussetzung dafür ist jedoch, dass man typischerweise mindestens eine Null mehr als erforderlich ergänzt.

Zur Berechnung der schnellen Faltung wird das nullstellenergänzte Segment der Länge $L_{FFT,n}$ mit einem FFT-Algorithmus zur effizienten Berechnung der DFT in dem Block 240 in den Frequenzbereich transformiert. Dabei ist die Länge $L_{FFT,n}$ der FFT konfigurierbar von beispielsweise $L_{FFT}$=32 entsprechend einer Emittersignalabtastrate $1/T_n'$ von 312.5 kS/s bis $L_{FFT}$=1024 entsprechend einer Emittersignalabtastrate von 10 MS/s. Je schmalbandiger ein Emittersignal ist, d.h. je geringer die Emittersignalabtastrate ist, umso mehr Emittersignale können mit dem erfindungsgemäßen Konzept simuliert werden. Gemäß Ausführungsbeispielen der vorliegenden Erfindung können zur Berechnung der FFT verschiedene Algorithmen verwendet werden, wie beispielsweise Radix-$2^x$-Algorithmen (x=1,2,...), oder aber auch der Winograd-Algorithmus. Die Wahl des FFT-Algorithmus hängt dabei u.a. von der Länge $L_{FFT,n}$ der FFT ab.

Das in den Frequenzbereich transformierte Ausgangssignalsegment $S_n[m]$ (m=1,2,..., $L_{FFT,n}$ ; n = 1,2,...,N) des FFT-Blocks 240 wird nun mittels eines digitalen Mischers 250 mit einer frequenztransformierten Impulsantwort $H_{1,n}[m]$ (m=1,2,..., $L_{FFT,n}$ ; n = 1,2,...,N) multipliziert, was einer Faltung im Zeitbereich entspricht. Dabei stellt $H_{1,n}[m]$ die frequenztransformierte Impulsantwort eines Tiefpass- bzw. Interpolationsfilters dar. $H_{1,n}[m]$ sorgt vorzugsweise dafür, dass sich die Ausgangsdaten, d.h. die Segmente des FFT-Blocks 240 nicht überfalten, weil sonst eine nachfolgende zyklische Verschiebung zur Anpassung der Frequenz in einen Zwischen- bzw. Trägerfrequenzbereich nicht funktioniert. Es ist daher vorteilhaft, dass $H_{1,n}[m]$ jeweils an den Rändern Werte von Null aufweist.

Die Interpolation der Emittersignale $s_n[k]$ (n = 1,...,N) um Faktor L umfasst eine Spreizung der (bandbegrenzten) Eingangssignale $s_n[k]$ mit L-1 Nullen je Abtastwert k. Dadurch wird das jeweilige Spektrum periodisch und das Signal erscheint L-mal im Spektralbereich. Mittels des Interpolationsfilters $H_{1,n}[m]$, in der Regel ein Tiefpass-, manchmal auch ein Bandpassfilter, wird nun eines dieser L "Images" ausgewählt und den Rest unterdrückt. Bei der Implementierung der Faltung im Frequenzbereich wird ausgenutzt, dass Samples von $H_{1,n}[m]$ im Frequenzbereich aufgrund der schmalbandigen Emittersignale $s_n[k]$ und der großen Interpolationsfaktoren (z.B. 128) meistens Null sind. Diese Stellen braucht man nicht zu berechnen und kommt daher mit einer kurzen FFT aus.

Die Faltung im Frequenzbereich erfordert, dass mindestens so viele Nullen in die Eingangsdaten des FFT-Blocks 240 ergänzt werden, wie die Impulsantwort von $H_{1,n}[m]$ lang ist bzw. die Länge, auf die sie in Anbetracht der zulässigen Fehler verkürzt werden kann. $H_{1,n}[m]$ wird also so gewählt, dass die Impulsantwort kurz genug ist, damit die FFT 240 nicht zu lang gewählt werden muss. Weiterhin sollte der Nutzfrequenzbereich des entsprechenden Emittersignals durch $H_{1,n}[m]$ nicht zu sehr eingeschränkt werden.

Eine Realisierung von $H_{1,n}[m]$ gemäß einem Ausführungsbeispiel der vorliegenden Erfindung ist ein Halbbandfilter mit einer auf den Nutzfrequenzbereich normierten Durchlassbandbreite von 0.2 und einer Sperrdämpfung von 80dB ab 0.8 des Nutzfrequenzbereichs. Die zugehörige Impulsantwort hat beispielsweise eine Länge von 15 und lässt sich somit sehr gut in einer kurzen FFT mit Länge $L_{FFT,n}$=32 unterbringen (d.h. 16±1 Nutzdaten, 15...17 Nullen). Damit ist die Bandbreite des Nutzsignales auf das 0.2-fache der Abtastfrequenz $1/T_n$ (n=1,2,...,N) beschränkt, was jedoch in der Praxis keine Einschränkung darstellt, da man dieses durch eine Interpolation um den Faktor Zwei in der Stufe 210 sicherstellen kann. Damit darf das Eingangssignal aus 200 eine (normierte) Bandbreite von 0.4 aufweisen, was praxisgerecht ist. Stufe 210 wird gemäß Ausführungsbeispielen so langsam getaktet, dass der Rechenaufwand dafür faktisch vernachlässigbar ist.

Das mittels des digitalen Mischers 250 und der DFT $H_{1,n}[m]$ im Frequenzbereich tiefpassgefilterte Emittersignal wird im Anschluss durch einen weiteren digitalen Mischer 260 mit der DFT $H_{2,n}[m]$ ($m=1,2,...,L_{FFT}$ ; $n = 1,2,...,N$) multipliziert und dadurch eine gewünschte Zeitverzögerung bzw. Phasenlage des Eingangssignals $S_n[k]$ ($n = 1,2,...,N$) fein eingestellt. Die Funktion $H_{2,n}[m]$ stellt also eine lineare Beziehung zwischen Frequenz und Phase dar. Hierbei ist zu bemerken, dass gemäß Ausführungsbeispielen der vorliegenden Erfindung die Reihenfolge der Multiplikation mit den beiden Übertragungsfunktionen $H_{1,n}[m]$ und $H_{2,n}[m]$ auch vertauscht werden kann, d.h. also das Distributivgesetz angewendet werden kann. Durch einen Skalarwert in der Funktion $H_{2,n}[m]$ kann zusätzlich auch eine Amplitude bzw. eine Dämpfung eines Kanals vom n-ten Emitter zum Simulationsort bzw. dem Ort des Empfängers eingestellt werden. Eine frühere Änderung der Amplitude des Emittersignals in der Signalkette, beispielsweise im Zeitbereich, ist gemäß weiteren Ausführungsbeispielen der vorliegenden Erfindung auch denkbar, würde aber zu größeren Rechenungenauigkeiten führen.

In dem in Fig. 2 gezeigten Ausführungsbeispiel der vorliegenden Erfindung ist die Signalverarbeitung der bisher beschriebenen Einrichtungen 200 bis 265 zur Simulation der N Emittersignale in N Blöcken parallelisiert, wie es in Fig. 2 angedeutet ist. D.h. die Verarbeitungsschritte in den Blöcken #1 bis #N lassen sich beispielsweise auch auf getrennten Hardwareplattformen rechnen.

Die einzelnen Ausgangssignale $\tilde{S}_n[m]=S_n[m]$ $\cdot H_1[m] \cdot H_{2,n}[m]$ ($m=1,2,...,L_{FFT}$ ; $n = 1,2,...,N$) der Blöcke #1 bis #N sind nun die Fourier-Transformierten der Länge $L_{n,\,FFT}$ der zeitverzögerten und gedämpften Einzelsignale im Basisband. Um die N Basisbandsignale nun in ihren jeweiligen Zwischen- bzw. Trägerfrequenzbereich zu schieben, wird jeweils die Länge $L_{n,FFT}$ des Eingangs- bzw. Basisbandfrequenzbereichs auf eine größere Länge $L_{IFFT} > L_{n,FFT}$ eines Ausgangsfrequenzbereichs für ein aus den N Einzelsignalen kombiniertes Signal $S_{ges}[m]$ vergrößert. Dabei beträgt die Anzahl der Bins für den Ausgangsfrequenzbereich $L_{IFFT}$, wobei gemäß einem Ausführungsbeispiel $L_{IFFT} = 4096$ ist. Je nach Bandbreite der N Emittersignale ist ein Verhältnis $L_{IFFT}/L_{n,FFT}$ der Längen $L_{IFFT}/L_{n,FFT} \geq 4$. Die Bandbreite $\Delta f$ eines einzelnen FFT-Bins ist sowohl für die kurze FFT als auch die längere IFFT identisch.

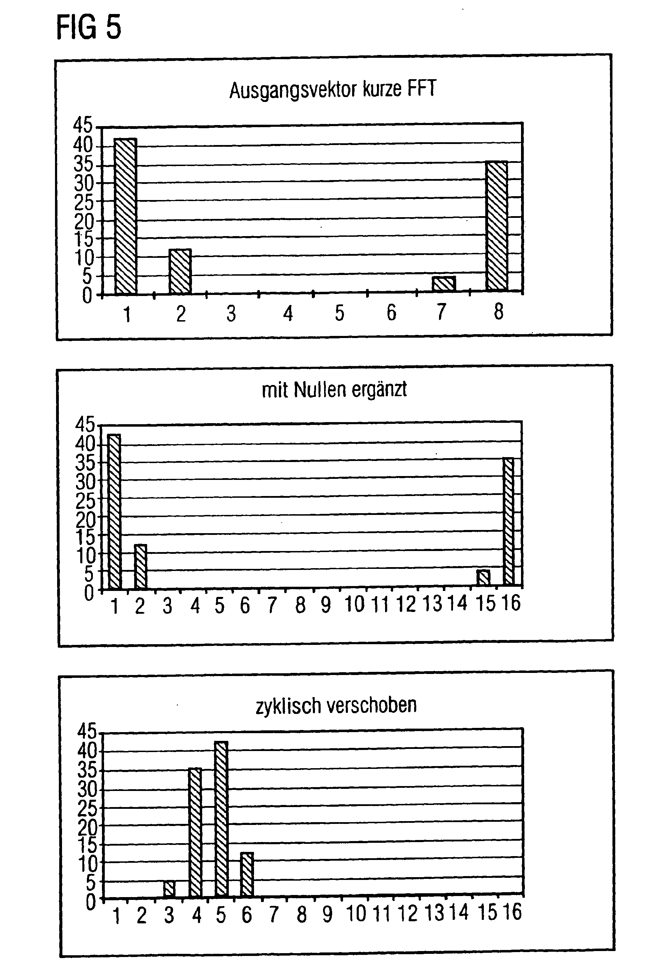

Fig. 5 zeigt schematisch das Vorgehen bei der Verschiebung der Fourier-Transformierten zeitverzögerten und gedämpften Einzelsignale im Basisband in ihren jeweiligen Zwischen- bzw. Trägerfrequenzbereich.

Fig. 5 zeigt beispielhaft eine Fourier-Transformierte $S_n[m]$ der Länge $L_{FFT}=8$. Die Länge $L_{FFT}=8$ des Eingangs- bzw. Basisbandfrequenzbereichs wird auf eine größere Länge $L_{IFFT}=16$ eines Ausgangsfrequenzbereichs vergrößert, d.h. der Frequenzbereich wird in dem in Fig. 5 gezeigten Szenario verdoppelt. Daraufhin wird das Basisbandsignal um $4\Delta f$ in einen Zwischen- bzw. Trägerfrequenzbereich verschoben.

Die Länge $L_{FFT,n}$ des in dem oberen Teil von Fig. 5 beispielhaft gezeigten Ausgangsvektors der kurzen FFT ($L_{FFT,n}=8$ in Fig. 5) wird auf die Länge $L_{IFFT}$ des Eingangsvektors der IFFT gebracht ($L_{IFFT}=16$ in Fig. 5), so wie es in dem mittleren Teil von Fig. 5 beispielhaft gezeigt ist. Ausgehend von der üblichen FFT-Darstellung, bei der negative Frequenzen in der oberen Hälfte des FFT-Ausgangsvektors liegen, werden Nullen somit in der Mitte zwischen den positiven und negativen Frequenzbins eingefügt, bis die negative Frequenzen wieder am oberen Ende des verlängerten Eingangsvektors der IFFT zu liegen kommen. Das Verschieben der Frequenzbins in den Zwischen- bzw. Trägerfrequenzbereich erfolgt gemäß Ausführungsbeispielen zyklisch, d.h. die negativen Frequenzen wandern von unten wieder in den positiven Frequenzbereich ein, so wie es in dem unteren Teil von Fig. 5 gezeigt ist, wo das in dem oberen Teil von Fig. 5 dargestellte Basisbandspektrum um $4\Delta f$ in den Zwischen- bzw. Trägerfrequenzbereich verschoben ist.

Mit einer in Fig. 2 gezeigten Addierermatrix, welche die Blöcke 270 und 275 umfasst, wird festgelegt, wo im Ausgangsfrequenzbereich die Zwischen- bzw. Trägerfrequenz des entsprechenden Emitters zu liegen kommt. Dies wird dadurch erreicht, in dem man die Ausgangsdaten $\tilde{S}_n[m]$ der FFT (Basisband) auf die geeigneten Stellen im Ausgangsfrequenzbereich positioniert. Falls mehrere Emitter nahe beieinander oder gar überlappend platziert werden sollen, können die Ausgangsdaten $\tilde{S}_n[m]$ der FFTs auf die gleichen Bins im Ausgangsfrequenzbereich treffen. In diesem Fall werden diese Ausgangsdaten entsprechend addiert. Sind sämtliche N Emittersignale durch die Einrichtung 185 frequenzrichtig addiert worden, so wird ein Ausgangssegment der Länge $L_{IFFT}$ des kombiniertes Signal $S_{ges}[m]$ mittels einer IFFT 280 in den Zeitbereich transformiert. Die spektrale Darstellung sämtlicher N Emitter zusammen wird damit also vom Frequenzbereich in den Zeitbereich zurück transformiert. Durch das Verhältnis $L_{IFFT}/L_{FFT,n}$ findet im Zeitbereich eine Abtastratenwandlung statt, die jeweils dem Verhältnis der Länge der IFFT zu den jeweiligen Längen $L_{FFT,n}$ der FFTs für die einzelnen Emitter entspricht.

Ein dem IFFT-Block 280 nachgeschalteter Ausgangspuffer bestehend aus den Blöcken 285 und 290 sorgt dafür, dass die Daten der IFFT-Berechnungen mit dem erforderlichen zeitlichen Versatz addiert werden, der den beim Zero-Padding eingefügten Nullen entspricht. Dazu werden die im Puffer 290 stehenden Werte ausgelesen und mit dem Addierer 285 zeitrichtig addiert (Overlap-Add-Method). Die Abtastrate am Ausgang des Puffers 290 beträgt gemäß einem Ausführungsbeispiel der vorliegenden Erfindung B=40 MHz. Die Länge $L_{IFFT}$ beträgt gemäß einem Ausführungsbeispiel der vorliegenden Erfindung $L_{IFFT}$=4096 entsprechend der Bandbreite eines Bins von $\Delta f=B/L_{IFFT}$=9,765625 kHz. Daraus ergibt sich jeweils eine Speichertiefe von 4096 für die Blöcke 275 und 285 in Fig. 2.

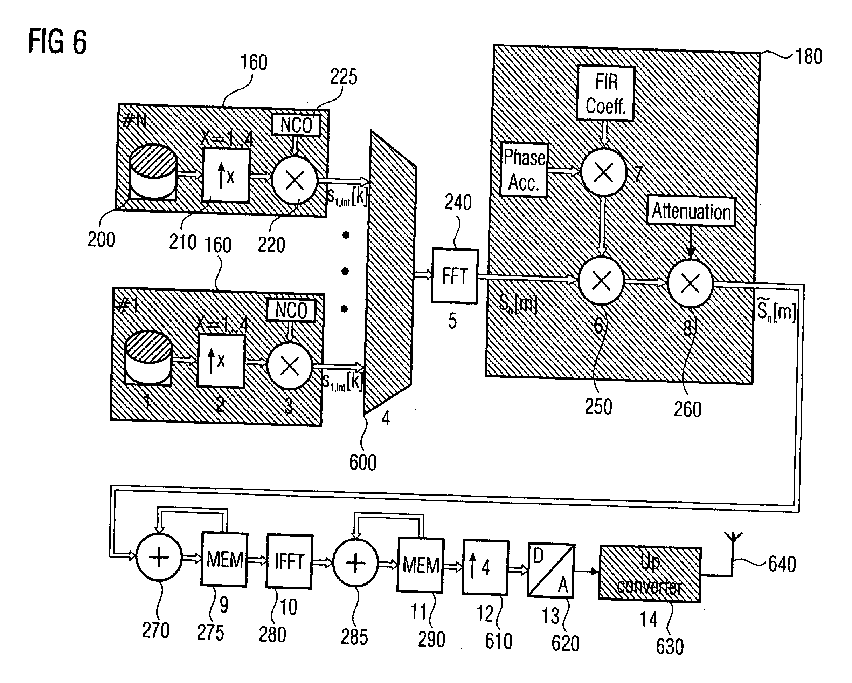

Eine mögliche Implementierung des in Fig. 2 gezeigten erfindungsgemäßen Verfahrens kann für mehrere Emitter parallel oder seriell bzw. semiparallel erfolgen. Eine serielle Variante nutzt die sequentielle Abarbeitung von Operationen im Multiplexverfahren mit Hilfe derselben Ressourcen. Dies reduziert den Ressourcenbedarf bei gleichzeitiger Notwendigkeit von Multiplexern und einer höheren Verarbeitungsgeschwindigkeit. Dazu zeigt Fig. 6 ein weiteres Ausführungsbeispiel der vorliegenden Erfindung, wobei die Operationen der Blöcke 230 bis 275 aus Fig. 2 seriell für sämtliche Emitter abgearbeitet werden.

Nach der Verarbeitung mit den Blöcken 200 bis 225 (Verarbeitungsstufen 1 bis 3 in Fig. 6) werden die in einem Speicher 200 abgelegten und anschließend interpolierten Zeitsignale $s_{n,int}[k]$ (n = 1,...,N) in der Frequenz verschiebbar pro Emitter bereitgestellt. Mit Hilfe eines Multiplexers 600 (Verarbeitungsstufe 4 in Fig. 6) wird jedes dieser Emittersignale mittels einer kurzen FFT 240 der Länge $L_{FFT}$ (Verarbeitungsstufe 5 in Fig. 6) sequentiell in den Frequenzbereich transformiert und mit der Einrichtung zur Verarbeitung 180 jeweils auf die im vorhergehenden beschriebene Weise im Frequenzbereich mit $H_{1,n}[m]$ (m=1,2,...,$L_{FFT}$ ; n = 1,2,...,N) interpoliert und eine Verzögerung, Phase und Amplitude mit $H_{2,n}[m]$ (m=1,2,...,$L_{FFT,n}$ ; n = 1,2,...,N) eingestellt (Verarbeitungsstufen 5 bis 8 in Fig. 6). Die so erzeugten diskreten Werte $\tilde{S}_n[m]=S_n[m]\cdot H_{1,n}[m]\cdot H_{2,n}[m]$ (m=1,2,...,$L_{FFT,n}$; n = 1,2,...,N) werden im Speicher 275 nach Erweiterung des Frequenzbereichs der FFT entsprechend im Ausgangsfrequenzbereich positioniert und gegebenenfalls bei Überlagerung mit dem Addierer 270 addiert. Dadurch stehen in dem in Fig. 6 gezeigten Ausführungsbeispiel der vorliegenden Erfindung die Spektren aller Emittersignale 1 bis N innerhalb der Bandbreite $B=\Delta f\cdot L_{IFFT}$ des kombinierten Ausgangssignals $S_{ges}[m]$ zur Verfügung.

Wie es im vorhergehenden bereits beschrieben wurde, dienen die nachgeschalteten Einheiten 280 bis 290 der Rücktransformation in den Zeitbereich. Mit dem nachgeschalteten Block 610 findet in dem in Fig. 6 gezeigten Ausführungsbeispiel der vorliegenden Erfindung noch eine weitere Abtastratenanpassung des simulierten zusammengesetzten Signals $S_{ges}[k]$ am Simulationsort statt. Danach wird mit einem D/A-Wandler 620 das zeitdiskrete simulierte zusammengesetzte Signal $s_{ges}[k]$ in den analogen Bereich gewandelt, d.h. $s_{ges}[k] \rightarrow s_{ges}(t)$. Befindet sich das simulierte, zusammengesetzte, analoge Signal $s_{ges}(t)$ nach der Transformation des kombinierten Signals im Frequenzbereich in den Zeitbereich in einem Zwischenfrequenzbereich, so kann mit einem nachgeschalteten Frequenzumsetzer 630 gemäß einem Ausführungsbeispiel der vorliegenden Erfindung das simulierte zusammengesetzte Signal $s_{ges}(t)$ in ein gewünschtes Frequenzband verschoben werden.

Eine Ressourcenaufstellung für die notwendigen Rechenmultiplikationen bei dem in Fig. 6 gezeigten Ausführungsbeispiel der vorliegenden Erfindung führt zu folgender Abschätzung, wobei nachfolgend MM/MHz für Mega-Multiplikationen pro MHz Summenbandbreite aller Emitter steht.

- Verarbeitungsstufen 1 bis 4: 30 MM/MHz
- Verarbeitungsstufe 5 (FFT): 280 MM/MHz
- Verarbeitungsstufen 6-8: 100 MM/MHz
- Verarbeitungsstufen 9-12: 3520 MM

Daraus ergibt sich folgende geschätzte Gesamtbilanz: 410 MM x (mögliche Bandbreite aller N Emitter zusammen) + 3520 MM

Das erfindungsgemäße Konzept weist also den Vorteil auf, dass bei einer hohen Anzahl von Emittern, insbesondere schmalbandigen Emittern, lediglich ein geringer Ressourcenbedarf zur Simulation des aus einer Mehrzahl von Einzelsignalen zusammengesetzten Signals notwendig ist.

Ein weiterer Vorteil von Ausführungsbeispielen der vorliegenden Erfindung besteht darin, dass wesentliche Verarbeitungsschritte zur Simulation der Einzelsignale gut parallelisiert werden können und damit auch auf getrennten Hardwareplattformen gerechnet werden können. Zusätzlich kann in niedrig getakteten Bereichen, d.h. in Bereichen zur Simulation der Einzelsignale im Basisband, durch Zeitmultiplex eine erhebliche Aufwandsreduzierung bezüglich der eingesetzten Ressourcen erreicht werden. Vorteilhaft ist weiterhin die einfache Strukturierung der Implementierung von Ausführungsbeispielen der vorliegenden Erfindung, welche somit gut skalierbar ist.

Ein weiterer Vorteil von Ausführungsbeispielen der vorliegenden Erfindung ist, dass die Anzahl von schnell zu taktenden Verarbeitungsstufen, beispielsweise der IFFT, die in einer Größenordnung eines Systemtakts betrieben werden, unabhängig von der Anzahl der simulierten Sender bzw. Emitter ist.

Zusammenfassend schafft das erfindungsgemäße Konzept ein Verfahren zur Erzeugung von mehreren Testsignalen im HF-Bereich aus vorher abgelegten Daten, das dadurch gekennzeichnet ist, dass die abgelegten Daten jeweils eine Signalfolge eines einzelnen Emitters als Zeitfunktion beinhalten und nicht eine Kombination von unabhängigen Signalen. Die Interpolation bzw. die Abtastratenerhöhung wird bei dem erfindungsgemäßen Verfahren aufgeteilt in eine Interpolation im Zeitbereich und eine Interpolation im Frequenzbereich, wobei bei der Interpolation im Frequenzbereich die eingangsseitig verwendete FFT kürzer ist als die ausgangsseitig verwendete IFFT. Ein eventuell gewünschter Frequenzversatz des Emitters wird in einen ganzzahligen Anteil, der im Frequenzbereich realisiert wird und einen Bruchteil, der im Zeitbereich realisiert wird aufgeteilt. Weiterhin wird ein eventuell gewünschter Zeitversatz des Emitters in einen ganzzahligen Anteil, der im Zeitbereich realisiert wird und einen Bruchteil, der im Frequenzbereich realisiert aufgeteilt. Eine Interpolation im Zeitbereich vor der kurzen FFT ist gemäß Ausführungsbeispiel der vorliegenden Erfindung möglich, aber nicht zwingend erforderlich. Das erfindungsgemäße Verfahren nutzt zur Interpolation also nicht eine Filterkette pro Emitter, sondern bedient sich einer Kombination aus Fourier Transformationen.

Insbesondere wird darauf hingewiesen, dass abhängig von den Gegebenheiten das erfindungsgemäße Schema zur Simulation eines aus einer Mehrzahl von Einzelsignalen von jeweiligen Signalorten zusammengesetzten Signals an einem Simulationsort auch in Software implementiert sein kann. Die Implementierung kann auf einem digitalen Speichermedium, insbesondere einer Diskette oder einer CD mit elektronisch auslesbaren Steuersignalen erfolgen, die somit einem programmierbaren Computersystem und/oder Mikrocontroller zusammenwirken können, dass das entsprechende Verfahren zur Simulation eines aus einer Mehrzahl von Einzelsignalen von jeweiligen Signalorten zusammengesetzten Signals an einem Simulationsort ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens zur Simulation eines aus einer Mehrzahl von Einzelsignalen zusammengesetzten Signals, wenn das Computerprogrammprodukt auf einem Rechner und/oder Mikrocontroller abläuft. In anderen Worten ausgedrückt kann die Erfindung somit als ein Computerprogramm mit einem Programmcode zur Durchführung des Verfahrens zur Simulation eines aus einer Mehrzahl von Einzelsignalen zusammengesetztes Signals realisiert werden, wenn das Computerprogramm auf einem Computer und/oder Mikrocontroller abläuft.

**Patentansprüche**

1. Vorrichtung (150) zur Simulation eines aus einer Mehrzahl von Einzelsignalen zusammengesetzten Signals, mit folgenden Merkmalen:

   einer Einrichtung (160) zum Bereitstellen der Mehrzahl von Einzelsignalen ($s_n[k]$) im Zeitbereich;
   einer Einrichtung (170) zum Transformieren der Einzelsignale ($s_n[k]$) aus dem Zeitbereich in den Frequenzbereich jeweils mittels einer diskreten Fourier-Transformation mit einer ersten Länge ($L_{FFT,n}$);
   einer Einrichtung (180) zur Verarbeitung der in den Frequenzbereich transformierten Einzelsignale ($S_n[m]$) jeweils abhängig von einem zwischen einem Simulationsort und einem jeweiligen Signalort vorliegenden Signalkanal;
einer Einrichtung (185) zum Kombinieren der verarbeiteten, in den Frequenzbereich transformierten Einzelsignale in ein kombiniertes Signal ($S_{ges}[m]$), wobei die Einrichtung (185) zum Kombinieren ausgebildet ist, um die Bandbreite des jeweiligen Frequenzbereichs der diskreten Fourier-Transformation zu einem Ausgangsfrequenzbereich zu vergrößern; und
eine Einrichtung (190) zum Transformieren des kombinierten Signals ($S_{ges}[m]$) aus dem Ausgangsfrequenzbereich in den Zeitbereich mittels einer inversen diskreten Fourier-Transformation mit einer zweiten Länge ($L_{IFFT}$), um das zusammengesetzte Signal ($s_{ges}[k]$) zu erhalten, wobei die zweite Länge der inversen diskreten Fourier-Transformation aufgrund des vergößerten Ausgangsfrequenzbereichs größer ist als die erste Länge ($L_{FFT,n}$) der jeweiligen diskreten Fourier-Transformation.

2. Vorrichtung gemäß Anspruch 1, bei der die Einrichtung (160) zum Bereitstellen einen Speicher (200) aufweist, in dem die Mehrzahl der Einzelsignale im Zeitbereich mit definierten Abtastraten abgelegt sind.

3. Vorrichtung gemäß Anspruch 1 oder 2, bei der die Einrichtung zum Bereitstellen (160) ein Interpolationsfilter (210) im Zeitbereich aufweist, um die Abtastraten der Einzelsignale erhöhen zu können.

4. Vorrichtung gemäß einem der Ansprüche 1 bis 3, bei der die Einrichtung (160) zum Bereitstellen ferner eine Einrichtung zum digitalen Mischen (220) und einen numerisch kontrollierten Oszillator (225) aufweist, um die Einzelsignale um eine einstellbare Frequenz des numerisch gesteuerten Oszillator (225) verschieben zu können.

5. Vorrichtung gemäß einem der Ansprüche 1 bis 4, bei der die Einrichtung (160) zum Bereitstellen eine Nullenergänzungseinrichtung (230) aufweist, um Signalabschnitte der Einzelsignale mit Nullen ergänzen zu können, derart, dass eine Zeitverzögerung eines Einzelsignals mit einer zeitlichen Auflösung entsprechend der Abtastrate des Einzelsignals einstellbar ist.

6. Vorrichtung gemäß einem der vorhergehenden Ansprüche, bei der die Einrichtung (170) zum Transformieren ausgebildet ist, um Signalabschnitte der Einzelsignale jeweils mittels einer Fast-Fourier-Transformation (FFT) aus dem Zeitbereich in den Frequenzbereich zu transformieren.

7. Vorrichtung gemäß Anspruch 6, bei der eine Bandbreite der FFT in der Größenordnung der doppelten Bandbreite des Einzelsignals zuzüglich der Frequenzverschiebung durch den numerisch gesteuerten Oszillator (225) liegt.

8. Vorrichtung gemäß einem der vorhergehenden Ansprüche, bei der die Einrichtung (180) zur Verarbeitung ausgebildet ist, um die in den Frequenzbereich transformierten Einzelsignale jeweils mit einer Fourier-Transformierten eines Filters (250,255) zu multiplizieren.

9. Vorrichtung gemäß Anspruch 8, wobei das Filter (250,255) ein Tiefpassfilter ist.

10. Vorrichtung gemäß einem der vorhergehenden Ansprüche, bei der die Einrichtung (180) zum Verarbeiten ausgebildet ist, um die in den Frequenzbereich transformierten Einzelsignale jeweils mit einer Übertragungsfunktion (260,265) des vorliegenden Signalkanals zu multiplizieren, wobei die Übertragungsfunktion komplexwertig ist.

11. Vorrichtung gemäß einem der vorhergehenden Ansprüche, bei der die Einrichtung (185) zum Kombinieren ausgebildet ist, um die Frequenzbereiche der Einzelsignale in dem Ausgangsfrequenzbereich entsprechend den Einzelsignalen zugeordneten Frequenzverschiebungen zu verschieben.

12. Vorrichtung gemäß Anspruch 11, bei der die Einrichtung (185) zum Kombinieren ferner ausgebildet ist, um die FFTs der Einzelsignale über den Ausgangsfrequenzbereich aufzuaddieren zu einem kombinierten Signal ($S_{ges}$[m]) im Frequenzbereich.

13. Vorrichtung gemäß Anspruch 1, wobei eine Länge ($L_{IFFT}$) der IFFT zu einer Länge ($L_{FFT,n}$) der FFT dem Verhältnis von Ausgangsfrequenzbereich zu Eingangsfrequenzbereich entspricht.

14. Vorrichtung gemäß Anspruch 1 oder 13, wobei die Einrichtung (190) zum Transformieren ausgebildet ist, um zwei aufeinanderfolgende per IFFT transformierte zeitliche Segmente des kombinierten Ausgangssignals ($s_{ges}$[k]) mittels der überlappenden Additions-Methode (Overlap-Add-Method) zu kombinieren.

15. Vorrichtung gemäß einem der vorhergehenden Ansprüche, wobei die Vorrichtung (150) zur Simulation ein zusätzliches Interpolationsfilter (610) im Zeitbereich aufweist, um die Abtastrate des simulierten zusammengesetzten Signals am Simulationsort zu erhöhen.

16. Vorrichtung gemäß einem der vorhergehenden Ansprüche, wobei die Vorrichtung (150) zur Simulation ferner einen Digital-zu-Analog Wandler (620) aufweist, um das simulierte zusammengesetzte Signal ($s_{ges}$[k]) am Simulationsort in ein analoges Signal zu wandeln.

17. Vorrichtung gemäß einem der vorhergehenden Ansprüche, wobei die Vorrichtung (150) zur Simulation ferner einen Frequenzumsetzer (630) aufweist, um das simulierte zusammengesetzte Signal in ein definiertes Frequenzband zu verschieben.

18. Vorrichtung gemäß einem der vorhergehenden Ansprüche, wobei die Vorrichtung (150) zur Simulation einen Multiplexer (600) aufweist, um jedes der Einzelsignale sequentiell in den Frequenzbereich transformieren zu können.

19. Verfahren zur Simulation eines aus einer Mehrzahl von Einzelsignalen zusammengesetzten Signals, mit folgenden Schritten:

Bereitstellen der Mehrzahl von Einzelsignalen im Zeitbereich;
Transformieren der Einzelsignale aus dem Zeitbereich in den Frequenzbereich jeweils mittels einer diskreten Fourier-Transformation mit einer ersten Länge ($L_{FFT,n}$) ;
Verarbeiten der in den Frequenzbereich transformierten Einzelsignale jeweils abhängig von einem zwischen dem Simulationsort und dem jeweiligen Signalort vorliegenden Signalkanal;
Kombinieren der verarbeiteten, in den Frequenzbereich transformierten Einzelsignale in ein kombiniertes Signal, wobei bei dem Kombinieren eine Bandbreite des jeweiligen Frequenzbereichs der diskreten Fourier-Transformation zu einem Ausgangsfrequenzbereich vergrößert wird; und
Transformieren des kombinierten Signals aus dem Ausgangsfrequenzbereich in den Zeitbereich mittels einer inversen diskreten Fourier-Transformation (IFFT) mit einer zweiten Länge ($L_{IFFT}$), um das simulierte zusammengesetzte Signal ($s_{ges}$[k]) zu erhalten, wobei die zweite Länge der inversen diskreten Fourier-Transformation aufgrund des vergrößerten Ausgangsfrequenzbereichs größer ist als die erste Länge ($L_{FFT,n}$) der jeweiligen diskreten Fourier-Transformation.

20. Computer-Programm mit einem Programm-Code zur Durchführung des Verfahrens zur Simulation eines zusammengesetzten Signals gemäß Anspruch 19, wenn das Computer-Programm auf einem Computer läuft.

**Claims**

1. An apparatus (150) for simulating a signal composed of a plurality of individual signals, comprising:

    a means (160) for providing the plurality of individual signals ($s_n[k]$)in the time domain;
    a means (170) for transforming the individual signals ($s_n[k]$) from the time domain to the frequency domain, each by a discrete Fourier transformation having a first length ($L_{FFT,n}$);
    a means (180) for processing the individual signals ($S_n[m]$) transformed to the frequency domain, each depending on a signal channel existing between a simulation location and a respective signal location;
    a means (185) for combining the processed individual signals transformed to the frequency domain to a combined signal ($S_{ges}[m]$), wherein the means (185) for combining is implemented to extend the bandwidth of the respective frequency domain of the discrete Fourier transformation to an output frequency domain; and
    a means (190) for transforming the combined signal ($S_{ges}[m]$) from the output frequency domain to the time domain by an inverse discrete Fourier transformation having a second length ($L_{IFFT}$), for obtaining the combined signal ($s_{ges}[k]$), wherein the second length of the inverse discrete Fourier transformation is greater than the first length ($L_{FFT,n}$) of the respective discrete Fourier transformation due to the extended output frequency domain.

2. The apparatus according to claim 1, wherein the means (160) for providing has a memory (200), in which the plurality of the individual signals are stored in the time domain with defined sampling rates.

3. The apparatus according to claim 1 or 2, wherein the means for providing (160) has an interpolation filter (210) in the time domain, in order to be able to increase the sampling rates of the individual signals.

4. The apparatus according to one of claims 1 to 3, wherein the means (160) for providing further has a means for digitally mixing (220) and a numerically controlled oscillator (225), in order to be able to shift the individual signals by an adjustable frequency of the numerically controlled oscillator (225).

5. The apparatus according to one of claims 1 to 4, wherein the means (160) for providing has a zero padding means (230) in order to be able to pad signal portions of the individual signals with zeros, such that a time delay of an individual signal can be adjusted with a temporal resolution corresponding to the sampling rate of the individual signal.

6. The apparatus according to one of the previous claims, wherein the means (170) for transforming is implemented to transform signal portions of the individual signals each by a fast Fourier transformation FFT from the time domain to the frequency domain.

7. The apparatus according to claim 6, wherein a bandwidth of the FFT is in the order of twice the bandwidth of the individual signals plus the frequency shift by the numerically controlled oscillator (225).

8. The apparatus according to one of the previous claims, wherein the means (180) for processing is implemented to multiply the individual signals transformed to the frequency domain each with a Fourier transform of a filter (250, 255).

9. The apparatus according to claim 8, wherein the filter (250, 255) is a low-pass filter.

10. The apparatus according to one of the previous claims, wherein the means (180) for processing is implemented to multiply the individual signals transformed to the frequency domain each with a transfer function (260, 265) of the existing signal channel, wherein the transfer function is complex-valued.

11. The apparatus according to one of the previous claims, wherein the means (185) for combining is implemented to shift the frequency domains of the individual signals in the output frequency domain corresponding to the frequency shifts associated to the individual signals.

12. The apparatus according to claim 11, wherein the means (185) for combining is further implemented to add the FFTs of the individual signals across the output frequency domain to a combined signal ($S_{ges}[m]$) in the frequency domain.

13. The apparatus according to claim 1, wherein a length ($L_{IFFT}$) of the IFFT to a length ($L_{FFT,n}$) of the FFT corresponds to the ratio of output frequency domain to input frequency domain.

14. The apparatus according to claim 1 or 13, wherein the means (190) for transforming is implemented to combine two subsequent temporal segments of the combined output signal ($s_{ges}[k]$) transformed per IFFT by the overlap add method.

15. The apparatus according to one of the previous claims, wherein the apparatus (150) for simulating has an additional interpolation filter (610) in the time domain for increasing the sampling rate of the simulated combined signal at the simulation location.

16. The apparatus according to one the previous claims, wherein the apparatus (150) for simulating further has a digital-analog converter (620) for converting the simulated combined signal ($s_{ges}$[k]) at the simulation location to an analog signal.

17. The apparatus according to one the previous claims, wherein the apparatus (150) for simulating further has a frequency converter (630) for shifting the simulated combined signal to a defined frequency band.

18. The apparatus according to one of the previous claims, wherein the apparatus (150) for simulating has a multiplexer (600) for transforming each of the individual signals sequentially to the frequency domain.

19. A method for simulating a signal composed of a plurality of individual signals, comprising:

   providing the plurality of individual signals in the time domain;
   transforming the individual signals from the time domain to the frequency domain each by a discrete Fourier transformation having a first length ($L_{FFT,n}$) ;
   processing the individual signals transformed to the frequency domain each depending on a signal channel existing between the simulation location and the respective signal location;
   combining the processed individual signals transformed to the frequency domain to a combined signal, wherein during combining a bandwidth of the respective frequency domain of the discrete Fourier transformation is extended to an output frequency domain; and
   transforming the combined signal from the output frequency domain to the time domain by an inverse discrete Fourier transformation IFFT having a second length ($L_{IFFT}$) for obtaining the simulated combined signal ($s_{ges}$[k]), wherein the second length of the inverse discrete Fourier transformation is greater than the first length ($L_{FFT,n}$) of the respective discrete Fourier transformation due to the extended output frequency domain.

20. A computer program having a program code for performing the method for simulating a combined signal according to claim 19 when the computer program runs on a computer.

**Revendications**

1. Dispositif (150) pour simuler un signal composé d'une pluralité de signaux individuels, aux caractéristiques suivantes:

un moyen (160) destiné à mettre à disposition la pluralité de signaux individuels ($s_n$[k]) dans le domaine temporel;
un moyen (170) destiné à transformer les signaux individuels ($s_n$[k]) du domaine temporel au domaine fréquentiel chaque fois à l'aide d'une transformation de Fourier discrète d'une première longueur ($L_{FFT,n}$);
un moyen (180) destiné à traiter les signaux individuels ($S_n$[m]) transformés au domaine fréquentiel chaque fois en fonction d'un canal de signal présent entre un endroit de simulation et un endroit de signal respectif;
un moyen (185) destiné à combiner les signaux individuels transformés au domaine fréquentiel traités, pour obtenir un signal combiné ($S_{ges}$[m]), le moyen (185) destiné à combiner étant réalisé pour agrandir la largueur de bande du domaine fréquentiel respectif de la transformation de Fourier discrète à un domaine fréquentiel de sortie; et
un moyen (190) destiné à transformer le signal combiné ($S_{ges}$[m]) du domaine fréquentiel de sortie au domaine temporel à l'aide d'une transformation de Fourier discrète inverse d'une deuxième longueur ($L_{IFFT}$), pour obtenir le signal composé ($S_{ges}$[k]), la deuxième longueur de la transformation de Fourier discrète inverse étant, par suite du domaine fréquentiel de sortie agrandi, supérieure à la première longueur ($L_{FFT,n}$) de la transformation de Fourier discrète respective.

2. Dispositif selon la revendication 1, dans lequel le moyen (160) destiné à mettre à disposition présente une mémoire (200) dans laquelle sont mémorisés la pluralité de signaux individuels dans le domaine temporel à des taux de balayage définis.

3. Dispositif selon la revendication 1 ou 2, dans lequel le moyen destiné à mettre à disposition (160) présente un filtre d'interpolation (210) dans le domaine temporel, pour pouvoir augmenter les taux de balayage des signaux individuels.

4. Dispositif selon l'une des revendications 1 ou 3, dans lequel le moyen (160) destiné à mettre à disposition présente par ailleurs un moyen destiné à mélanger numériquement (220) et un oscillateur à commande numérique (225), pour pouvoir déplacer les signaux individuels d'une fréquence réglable de l'oscillateur à commande numérique (225).

5. Dispositif selon l'une des revendications 1 à 4, dans lequel le moyen (160) destiné à mettre à disposition présente un moyen de remplissage de zéros (230), pour pouvoir remplir de zéros des segments des signaux individuels, de sorte qu'une temporisation d'un signal individuel puisse être réglé avec une résolution temporelle en fonction des taux de balayage du signal individuel.

**6.** Dispositif selon l'une des revendications précédentes, dans lequel le moyen (170) destiné à transformer est réalisé pour transformer des segments de signal des signaux individuels chaque fois à l'aide d'une transformation de Fourier rapide (FFT) du domaine temporel au domaine fréquentiel.

**7.** Dispositif selon la revendication 6, dans lequel une largeur de bande de la FFT est de l'ordre de grandeur de la double largeur de bande du signal individuel plus le décalage de fréquence par l'oscillateur à commande numérique (225).

**8.** Dispositif selon l'une des revendications précédentes, dans lequel le moyen (180) destiné à traiter est réalisé pour multiplier chacun des signaux individuels transformés au domaine fréquentiel par une transformée de Fourier d'un filtre (250, 255).

**9.** Dispositif selon la revendication 8, dans lequel le filtre (250, 255) est un filtre passe-bas.

**10.** Dispositif selon l'une des revendications précédentes, dans lequel le moyen (180) destiné à traiter est réalisé pour multiplier chacun des signaux individuels transformés au domaine fréquentiel par une fonction de transmission (260, 265) du canal de signal présent, la fonction de transmission étant à valeurs complexes.

**11.** Dispositif selon l'une des revendications précédentes, dans lequel le moyen (185) destiné à combiner est réalisé pour déplacer les domaines fréquentiels des signaux individuels au domaine fréquentiel de sortie en fonction des décalages de fréquence associés aux signaux individuels.

**12.** Dispositif selon la revendication 11, dans lequel le moyen (185) pour combiner est par ailleurs réalisé pour additionner les FFT des signaux individuels sur le domaine fréquentiel de sortie, pour obtenir un signal combiné ($S_{ges}[m]$) dans le domaine fréquentiel.

**13.** Dispositif selon la revendication 1, dans lequel une longueur ($L_{IFFT}$) des IFFT par rapport à une longueur ($L_{FFT,n}$) des FFT correspond au rapport entre le domaine fréquentiel de sortie et le domaine fréquentiel d'entrée.

**14.** Dispositif selon la revendication 1 ou 13, dans lequel le moyen (190) destiné à transformer est réalisé pour combiner deux segments temporels transformés par des IFFT successives du signal de sortie combiné ($s_{ges}[k]$) au moyen de la méthode d'addition en recouvrement (Overlap-Add Method).

**15.** Dispositif selon l'une des revendications précédentes, dans lequel le moyen (150) destiné à simuler présente un filtre d'interpolation (610) additionnel dans le domaine temporel, pour augmenter le taux de balayage du signal composé simulé à l'endroit de simulation.

**16.** Dispositif selon l'une des revendications précédentes, dans lequel le dispositif (150) destiné à simuler présente par ailleurs un convertisseur numérique-analogique (620), pour convertir le signal composé ($s_{ges}[k]$) simulé à l'endroit de simulation en un signal analogique.

**17.** Dispositif selon l'une des revendications précédentes, dans lequel le dispositif (150) destiné à simuler présente par ailleurs un convertisseur de fréquence (630), pour déplacer le signal composé simulé à une bande de fréquence définie.

**18.** Dispositif selon l'une des revendications précédentes, dans lequel le moyen (150) destiné à simuler présente un multiplexeur (600), pour pouvoir transformer chacun des signaux individuels séquentiellement au domaine fréquentiel.

**19.** Procédé de simulation d'un signal composé d'une pluralité de signaux individuels, aux étapes suivantes consistant à:

mettre à disposition la pluralité de signaux individuels dans le domaine temporel;
transformer les signaux individuels du domaine temporel au domaine fréquentiel chaque fois à l'aide d'une transformation de Fourier discrète d'une première longueur ($L_{FFT,n}$);
traiter les signaux individuels transformés au domaine fréquentiel chaque fois en fonction d'un canal de signal présent entre l'endroit de simulation et l'endroit de signal respectif;
combiner les signaux individuels transformés au domaine fréquentiel traités, pour obtenir un signal combiné, où, lors de la combinaison, une largeur de bande du domaine fréquentiel respectif de la transformation de Fourier discrète est agrandie à un domaine fréquentiel de sortie; et
transformer le signal combiné du domaine fréquentiel de sortie au domaine temporel à l'aide d'une transformation de Fourier discrète inverse (IFFT) d'une deuxième longueur ($L_{IFFT}$), pour obtenir le signal composé simulé ($s_{ges}[k]$), la deuxième longueur de la transformation de Fourier discrète inverse étant, par suite du domaine fréquentiel de sortie agrandi, supérieure à la première longueur ($L_{FFT,n}$) de la transformation de Fourier discrète respective.

20. Programme d'ordinateur avec un code de programme pour réaliser le procédé de simulation d'un signal composé selon la revendication 19 lorsque le programme d'ordinateur est exécuté sur un ordinateur.

FIG 1

EP 2 062 413 B1

FIG 2

## FIG 3A

$h_{lin}$ [K]
$X_n = 5$

1
4/5
3/5
2/5
1/5

0

K

## FIG 3B

K

## FIG 3C

K

FIG 4

# FIG 5

Ausgangsvektor kurze FFT

mit Nullen ergänzt

zyklisch verschoben

FIG 6

EP 2 062 413 B1

# FIG 7

## IN DER BESCHREIBUNG AUFGEFÜHRTE DOKUMENTE

**In der Beschreibung aufgeführte Patentdokumente**

- EP 0195573 A